# EUROPÄISCHE PATENTANMELDUNG

(11) **EP 1 162 720 A2**
(43) Veröffentlichungstag der Anmeldung: **12.12.2001**
(21) Anmeldenummer: 01112671.1
(22) Anmeldetag: 25.05.2001
(51) Int. Cl.: H02K 15/02

(54) **Blechlamellen für Blechpakete von rotierenden elektrischen Maschinen sowie Verfahren zur Herstellung von solchen Blechlamellen**

(30) Priorität: 09.06.2000 DE 10028200; 03.08.2000 DE 10037804
(71) Anmelder: Kienle & Spiess Stanz- und Druckgiesswerk GmbH, 74343 Sachsenheim (DE)
(72) Erfinder: Köhler, Eric, 74389 Cleebronn (DE); Rommel, Gerd, 74392 Freudental (DE)
(74) Vertreter: Kohl, Karl-Heinz

(57) **Zusammenfassung**

Aus einem Blechband werden lamellenförmige Vollringe zur Herstellung von Statoren und Rotoren gestanzt und zu Blechpaketen aufeinandergesetzt. Beim Stanzen verbleibt ein scheibenförmiger Innenausstoß (1), der als Ausschuß anfällt. Damit das Blechband optimal ausgenutzt werden kann, werden die Blechlamellen (2) des Rotors und/oder Stators wenigstens teilweise aus Teilringsegmenten (4) zusammengesetzt, die aus dem Innenausstoß (1) hergestellt werden. Dadurch tritt nur ein sehr geringer Materialabfall auf. Die Blechlamellen (2) können für Blechpakete für Rotoren, Statoren, Generatoren, Motoren, Startergeneratoren, Generatorstarter und dergleichen eingesetzt werden.

## Beschreibung

Die Erfindung betrifft Blechlamellen für Blechpakete für Rotoren und/oder Statoren für Generatoren, Motoren, Startergeneratoren, Generatorstartern und dergleichen nach dem Oberbegriff des Anspruches 1 sowie ein Verfahren zur Herstellung solcher Blechlamellen nach dem Oberbegriff des Anspruches 11.

Es ist bekannt, für Statoren und Rotoren aus einem Blechband lamellenförmige Vollringe herauszustanzen und sie zu Stator- bzw. Rotorpaketen aufeinanderzusetzen. Beim Stanzen verbleibt ein scheibenförmiger Innenausstoß, der als Ausschuß anfällt.

Der Erfindung liegt die Aufgabe zugrunde, die gattungsgemäßen Blechlamellen und das gattungsgemäße Verfahren so auszubilden, daß das Blechband zur Herstellung der Rotoren und/oder Statoren optimal ausgenutzt werden kann.

Diese Aufgabe wird bei den gattungsgemäßen Blechlamellen erfindungsgemäß mit den kennzeichnenden Merkmalen des Anspruches 1 und beim gattungsgemäßen Verfahren erfindungsgemäß mit den kennzeichnenden Merkmalen des Anspruches 11 gelöst.

Der Innenausstoß, der bei der Herstellung der Vollringe anfällt, wird erfindungsgemäß dazu herangezogen, aus ihm Teilringsegmente herzustellen. Aus ihnen können dann die Ringe für die Rotoren und/oder Statoren zusammengesetzt werden. Das zur Herstellung des Blechpaketes verwendete Blechband wird somit optimal ausgenutzt, so daß der Materialabfall nur noch sehr gering ist.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: einen Außen- und einen Innenring, der aus einem Blech gestanzt wird, sowie einen Innenausstoß einer bekannten Blechlamelle,
- Fig. 2: in einer Darstellung entsprechend Fig. 1 eine erste erfindungsgemäße Ausführungsform, bei der aus einem Blech ein Außenring sowie aus dem Innenausstoß Teilringe gestanzt werden,
- Fig. 3: in einer Darstellung entsprechend Fig. 2 eine zweite erfindungsgemäße Ausführungsform,
- Fig. 4: eine dritte erfindungsgemäße Ausführungsform,
- Fig. 5: eine Stanzfolge bei der Herstellung des Vollringes und der Teilringsegmente gemäß Fig. 2,
- Fig. 6: die Verwendung eines Scrollbandes für das Ausstanzen eines Außenringes und der Teilringsegmente gemäß Fig. 2,
- Fig. 7: eine weitere Ausführungsform eines Blechbandes, aus dem Vollringe und Teilringsegmente gestanzt werden,
- Fig. 8: eine weitere erfindungsgemäße Ausführung, bei der ein Vollring sowie Teilringsegmente im Innenausstoß gestanzt werden,
- Fig. 8a: einen Schnitt längs der Linie A-A in Fig. 8,
- Fig. 8b: einen Schnitt längs der Linie B-B in Fig. 8,
- Fig. 9: die Verbindung von Teilringsegmenten zu einem Ring,
- Fig. 10: eine weitere erfindungsgemäße Ausführungsform, bei der aus einem Blech zwei Vollringe sowie aus dem Innenausstoß Teilringsegmente gestanzt werden.

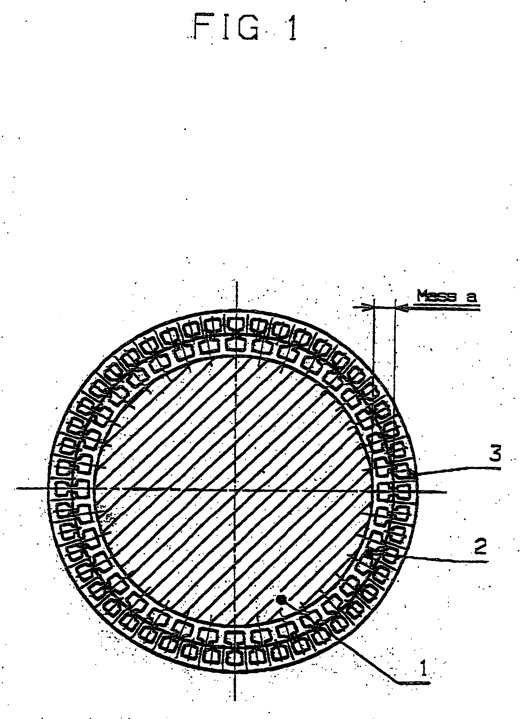

Zur Herstellung von Generatoren, Motoren oder der Kombination aus beiden, den sogenannten Startergeneratoren bzw. Generatorstartern, werden ringförmige Lamellen aus einem Blechband gestanzt. Die dabei entstehenden ringförmigen Blechlamellen werden zu Paketen aufeinandergesetzt und miteinander verbunden. Aus diesen Paketen werden Statoren und Rotoren hergestellt. Fig. 1 zeigt die übliche Ausbildung von ringförmigen Lamellen 2 und 3, die konzentrisch zueinander aus dem in Fig. 1 nicht dargestellten Blech gestanzt werden. Der äußere Ring 3 dient zur Herstellung eines Stators und der innere Ring 2 zur Herstellung eines Rotors und bei einer Außenläufermaschine auch umgekehrt. Der verbleibende Innenteil 1 des Bleches, der sogenannte Innenausstoß, stellt Abfall dar. Da der Innenring 2 nur geringe Breite a hat, entsteht ein verhältnismäßig hoher Schrottanteil 1.

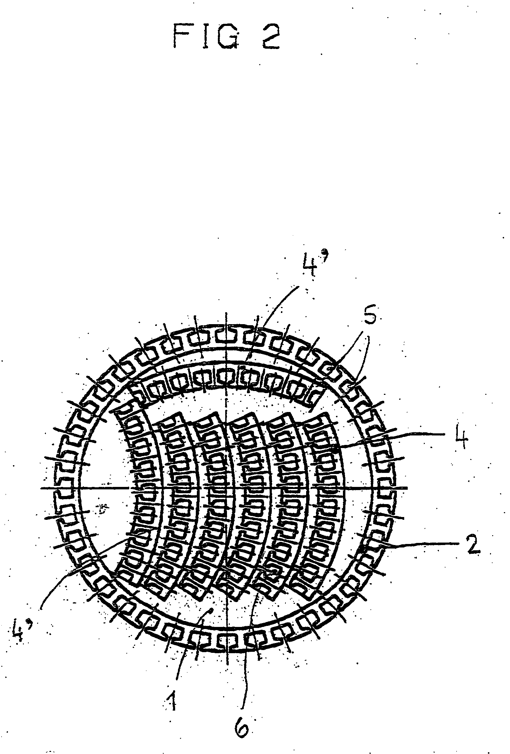

Fig. 2 zeigt eine erste Ausführungsform, bei welcher der Innenausstoß 1 zur Herstellung des Außenringes genutzt wird. Aus dem (nicht dargestellten) Blech wird der Innenring 2 als Vollring ausgestanzt. Während der Herstellung dieses Innenringes 2 in einem Folgewerkzeug oder auch in einem separaten Arbeitsgang werden aus dem Innenausstoß 1 Teilringsegmente 4 hergestellt, aus denen in einem weiteren Arbeitsschritt der Außenring 3 hergestellt wird. Die Teilringsegmente 4 können auch in einem separaten Arbeitsgang hergestellt werden, beispielsweise durch Laserschneiden, Plasmaschneiden, Wasserstrahlschneiden, Stanzen und dergleichen. Die Teilringsegmente 4 sind an ihren beiden Enden mit (nicht dargestellten) Formschlußelementen versehen, mit denen sie zum Vollring zusammengefügt werden können. Die Teilringsegmente 4 können sich jeweils über den gleichen Bogenwinkel erstrecken. Es ist aber auch möglich, die Teilringsegmente 4 unterschiedlich lang auszubilden, um auf diese Weise die Fläche des Innenausstoßes 1 optimal auszunutzen. Im dargestellten Ausführungsbeispiel sind zwei Teilringsegmente 4' länger ausgebildet als die übrigen, untereinander gleichen Teilringsegmente 4. Wie ein Vergleich mit Fig. 1 zeigt, ist der Materialabfall im Vergleich zur bekannten Ausbildung wesentlich verringert. Dadurch ist nur ein geringes Materialeinsatzgewicht im Verhältnis zum Gewicht des Endproduktes erforderlich, so daß sich ein sehr hoher Materialausnutzungsgrad ergibt.

Der als Vollring ausgebildete Innenring 2 weist in bekannter Weise an seinem äußeren Umfang Nuten 5 auf, während die Teilringsegmente 4, 4' für den herzustellenden Außenring an ihrer Innenseite in bekannter Weise Nuten 6 aufweisen.

Da die Innenringe 2 als Vollringe ausgebildet sind, kann der aus den Innenringlamellen hergestellte Rotor im späteren Einsatz mit hoher Drehzahl betrieben werden. Der aus den Teilringsegmenten 4 herzustellende Stator steht beim späteren Einsatz still, so daß das Zerlegen des Statorringes in einzelne Teilringsegmente 4, 4' ohne weiteres möglich ist. Die Zahl der Teilringsegmente 4, 4' für einen Statorring 3 kann beliebig gewählt werden. Die Teilringsegmente 4, 4' sind so ausgebildet, daß der aus ihnen hergestellte Außenring den gleichen Krümmungsmittelpunkt hat wie der Innenring 2.

Die Teilringsegmente 4, 4' können, wenn sie für hochpolige Maschinen, wie Startergeneratoren, eingesetzt werden, vorteilhaft in Stanzrichtung gelegt werden, so daß die Pole in Vorzugsrichtung liegen. Dies hat den Vorteil, daß der aus den Teilringsegmenten 4, 4' zusammengesetzte Statorring über seinen Umfang einen homogenen Magnetfluß sicherstellt. Bei hochpoligen Maschinen sind im allgemeinen die Induktionen in den Zähnen bzw. der magnetische Spannungsabfall in den Zähnen deutlich höher als im Joch, so daß durch Plazieren der Teilringsegmente 4, 4' mit den Zähnen bzw. Polen in Walzrichtung Vorteile gegeben sind.

Für die Verwendung in niederpoligen Maschinen, also für zwei- und vierpolige Maschinen, ist es günstiger, wenn die Teilringsegmente 4, 4' um 90° gedreht vorgesehen werden, damit der magnetische Spannungsabfall in den Jochen kleiner wird.

Die Teilringsegmente 4, 4' können somit je nach Anwendungsfall plaziert werden.

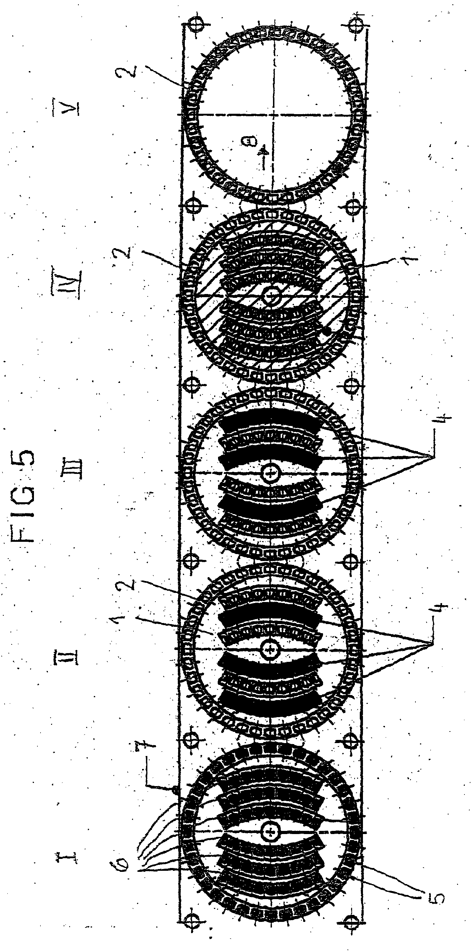

Fig. 5 zeigt die Herstellung des Innenringes 2 und der Teilringsegmente 4, 4'. Das Blechband 7 ist ein Schmalband, das nur wenig breiter ist als der Außendurchmesser der Innenringe 2. In einem ersten Stanzschritt I werden die Nuten 5 für den Innenring 2 und die Nuten 6 für die Teilringsegmente 4, 4' ausgestanzt. In den weiteren Stanzschritten II und III werden die Teilringsegmente 4 aus dem Blechband 7 gestanzt. Hierbei werden im Stanzschritt II die jeweils übernächsten Teilringsegmente 4 gestanzt. Im dritten Stanzschritt III werden die übrigen Teilringsegmente 4 gestanzt. Im Unterschied zur Ausführungsform gemäß Fig. 2 sind sämtliche Teilringsegmente 4 gleich lang. Dabei sind die Teilringsegmente 4 auf zwei Hälften des Innenausstoßes 1 verteilt und, bezogen auf die senkrecht zur Achse des Blechbandes 7 liegende Quermittelebene, spiegelsymmetrisch zueinander angeordnet.

Im Stanzschritt IV wird der Innenausstoß 1 vom Innenring 2 ausgestanzt. Im letzten Stanzschritt V wird der Innenring 2 durch Ausstanzen am Außenumfang vom Blechband 7 getrennt.

Der Ausstoß 1 mit den bereits in den Stanzschritten II und III ausgestanzten Teilringsegmenten 4 wird im Stanzschritt IV in geeigneter Weise aus dem Blechband 7 entfernt.

Die Teilringsegmente 4 liegen quer zur Stanzrichtung 8 und damit auch zur Walzrichtung des Blechbandes 7. Dadurch liegen die Nuten 6 der Teilringsegmente 4 etwa in Stanzrichtung 8, so daß beim zusammengesetzten Stator die Pole in Vorzugsrichtung liegen und dadurch ein homogener Magnetfluß im Stator gewährleistet wird.

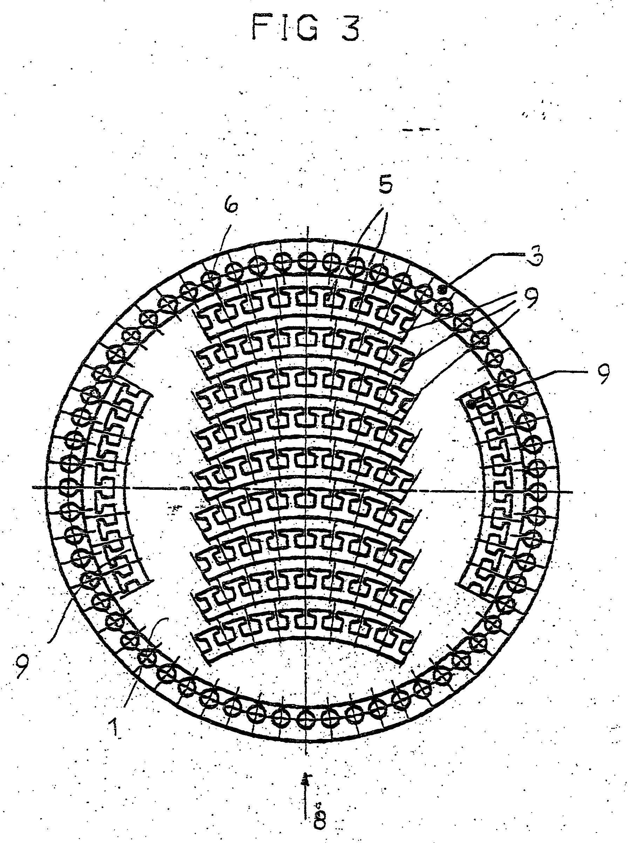

Fig. 3 zeigt den Fall einer Außenläufermaschine, bei welcher der Außenring den Rotor und der Innenring den Stator bildet. Hier wird der Innenring aus einzelnen Teilringsegmenten 9 zusammengesetzt, während der Außenring als Vollring ausgebildet wird. Die Teilringsegmente 9 für den Innenring sind im dargestellten Ausführungsbeispiel gleich lang, können aber auch, wie dies beispielhaft in Fig. 2 dargestellt ist, unterschiedliche Länge haben. Die Nuten 5 der Teilringsegmente 9 sind am Außenumfang vorgesehen, während die Nuten 6 des Vollringes 3 am Innenumfang angeordnet sind.

Nahezu sämtliche Teilringsegmente 9 liegen in Stanzrichtung 8 des (nicht dargestellten) Blechbandes mit geringem Abstand hintereinander und parallel zueinander. Beiderseits dieser Teilringsegmente 9 ist im Innenausstoß 1 noch Platz für jeweils ein Teilringsegment 9, das sich jeweils etwa senkrecht zu den in halber Breite des Innenausstoßes 1 befindlichen Teilringsegmenten 9 erstreckt.

Auch bei dieser Ausführungsform sind nahezu sämtliche Teilringsegmente 9 in bezug auf die Stanzrichtung 8 so angeordnet, daß sich ihre Nuten 5 im wesentlichen in Stanzrichtung 8 erstrecken. Wie anhand der Teilringsegmente 4, 4' erläutert, können sie je nach Anwendungsfall unterschiedlich zur Walzrichtung des Blechbandes liegen. Auch bei den noch zu beschreibenden Ausführungsformen können die Teilringsegmente in beliebigem Winkel zur Walzrichtung des Blechbandes liegen.

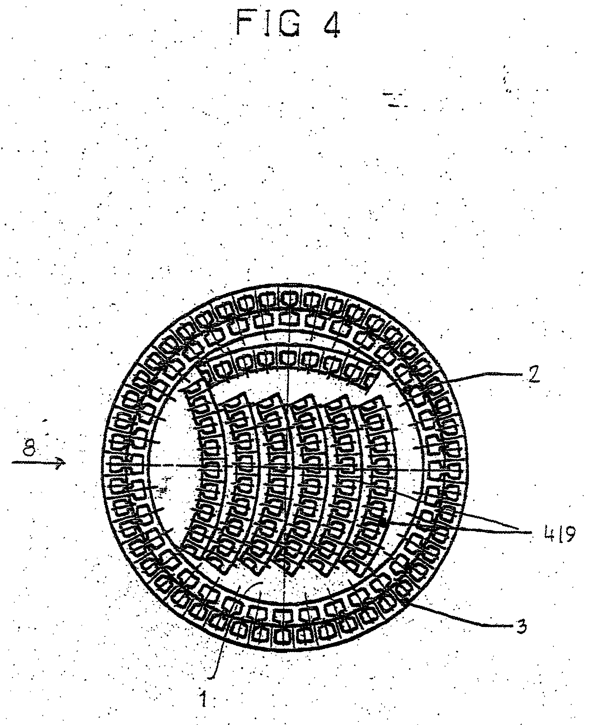

Fig. 4 zeigt die Möglichkeit, sowohl die Innen- als auch die Außenringe 2, 3 als Vollringe auszubilden. Im Innenausstoß 1 können auch in diesem Fall Teilringsegmente 4 bzw. 9 hergestellt werden, aus denen sich Innen- und/oder Außenringe bilden lassen. Im dargestellten Ausführungsbeispiel sind diese Teilringsegmente in gleicher Weise im Innenausstoß 1 angeordnet wie bei der Ausführungsform nach Fig. 2. Es ist selbstverständlich möglich, auch in diesem Falle die Teilringsegmente entsprechend dem Ausführungsbeispiel gemäß Fig. 3 oder gemäß Fig. 5 im Innenausstoß 1 anzuordnen. Nahezu sämtliche Teilringsegmente 4/9 sind entsprechend den vorigen Ausführungsformen in Stanzrichtung 8 so angeordnet, daß ihre Pole in Vorzugsrichtung liegen und sich dadurch ein homogener Magnetfluß ergibt.

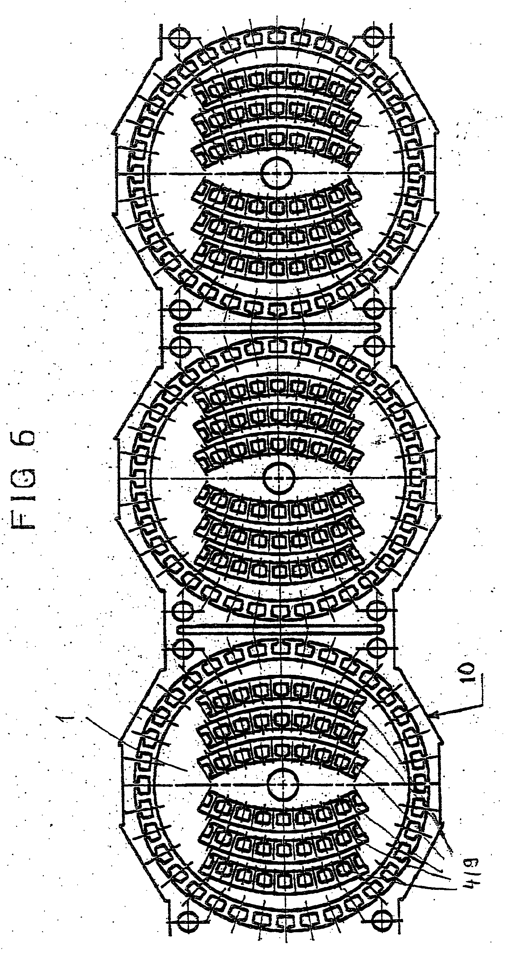

Fig. 6 zeigt die Möglichkeit, die Vollringe und Teilringsegmente aus einem Scrollband 10 herzustellen. Es zeichnet sich dadurch aus, daß es im Bereich zwischen den auszustanzenden Vollringen jeweils tailliert ist. Die Stanzfolge ist im übrigen gleich, wie anhand des Ausführungsbeispieles gemäß Fig. 5 beispielhaft erläutert worden ist. Die Teilringsegmente 4/9 werden aus dem Innenausstoß 1 hergestellt. Die Teilringsegmente können hierbei unterschiedlich angeordnet sein, wie anhand der Fig. 2 bis 5 erläutert worden ist. Sollen im Scrollband 10 zwei Vollringe gestanzt werden, wie beispielhaft in Fig. 4 dargestellt ist, dann erfolgt die Herstellung des zweiten Vollringes in einem weiteren Stanzschritt.

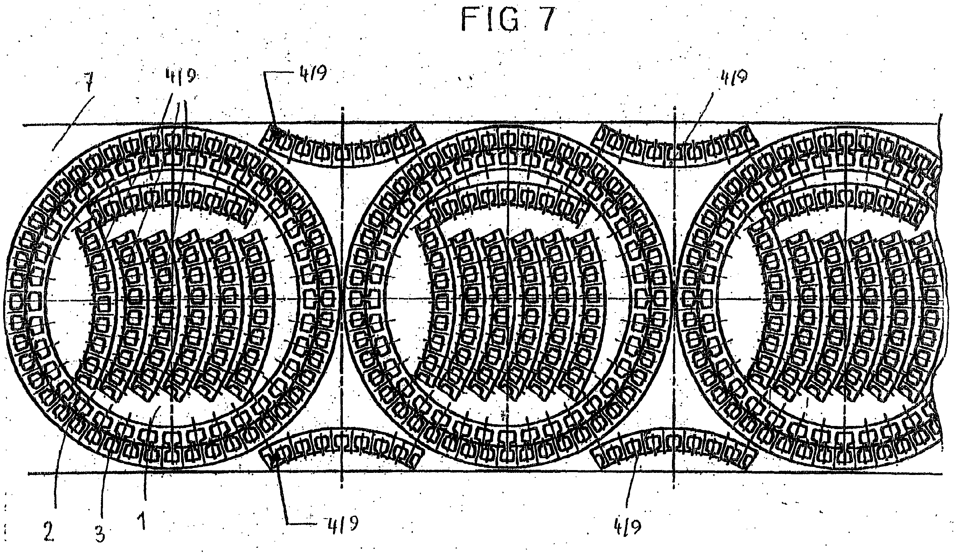

Fig. 7 zeigt die Möglichkeit, das Blechband 7 dadurch optimal auszunutzen, daß Teilringsegmente 4/9 nicht nur im Innenausstoß 1, sondern auch im Bereich zwischen den Vollringen direkt im Blechband 7 hergestellt werden. Dadurch kann das Blechmaterial in noch höherem Maße für die Herstellung der Ringe ausgenutzt werden. Diese außerhalb des Innenausstoßes 1 vorgesehenen Teilringsegmente 4/9 können gleich oder unterschiedlich ausgebildet sein wie die aus dem Innenausstoß 1 hergestellten Teilringsegmente 4/9. Es ist dabei möglich, die Teilringsegmente 4/9 im Blechband 7 auch unter sich unterschiedlich auszubilden. In Fig. 7 sind die im Blechband 7 außerhalb des Innenausstoßes 1 hergestellten Teilringsegmente 4/9 nur beispielhaft untereinander gleich ausgebildet. Im übrigen werden im Blechband 7 entsprechend der Ausführungsform gemäß Fig. 4 die Innenringe 2 und die Außenringe 3 jeweils als Vollringe gestanzt. Selbstverständlich können bei der Ausführung gemäß Fig. 7 nur die Innen- oder nur die Außenringe als Vollringe gestanzt werden, wie beispielhaft anhand der Fig. 2 und 3 erläutert worden ist.

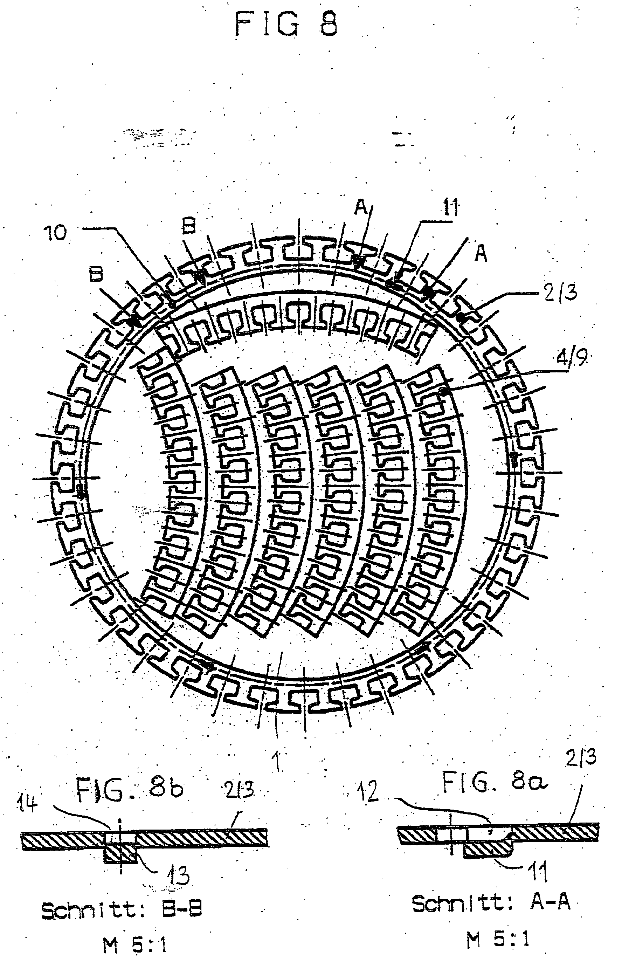

Fig. 8 zeigt einen Vollring, der im Ausführungsbeispiel ein Innenring ist. Er kann aber selbstverständlich auch als Außenring ausgebildet sein. Aus dem Innenausstoß 1 werden wiederum die Teilringsegmente 4/9 hergestellt, aus denen dann der entsprechende Innen- bzw. Außenring hergestellt wird. Der Vollring 2/3 weist über seinen Umfang verteilt Formschlußelemente auf, mit denen die einzelnen Vollringe im Stanzpaketierverfahren aufeinanderliegend miteinander verbunden werden können. Fig. 8a zeigt eine erste Ausführungsform dieser Formschlußelemente 11, die aus der Ebene des Vollringes 2/3 herausgebogen sind. Die Formschlußelemente 11 sind um die Dicke des Vollringes 2/3 herausgebogen und sind als in Umfangsrichtung des Vollringes sich erstreckende Zungen ausgebildet. Aufgrund des herausgebogenen Formschlußelementes 11 ist der Vollring mit einer entsprechenden Öffnung 12 versehen, die in Umfangsrichtung des Vollringes 2/3 länger ist als das Formschlußelement 11.

Aus den Vollringen 2/3 wird ein Außen- und/oder ein Innenring im Stanzpaketierverfahren hergestellt, bei dem die Vollringe so aufeinander gelegt werden, daß die zungenförmigen Formschlußelemente 11 des jeweils oberen Vollringes in die entsprechenden Öffnungen 12 des jeweils darunter befindlichen Vollringes eingreifen. Da die Öffnungen 12 in Umfangsrichtung des Vollringes 2, 3 länger sind als die Formschlußelemente 11, können die aufeinander liegenden und über die Formschlußelemente 11 formschlüssig miteinander verbundenen Vollringe 2/3 gegeneinander verdreht werden, um auf diese Weise einen Drall der Nuten zu erzeugen. Da das Stanzpaketierverfahren an sich bekannt ist, wird es nicht näher beschrieben.

Fig. 8b zeigt die Möglichkeit, als Formschlußelemente 13 über die Ebene des Vollringes 2/3 herausgeprägte Warzen vorzusehen. Über sie können aufeinander liegende Vollringe 2/3 ebenfalls formschlüssig miteinander verbunden werden, wobei die Warzen 13 des jeweils oberen Vollringes 2/3 in die entsprechenden kreisförmigen Vertiefungen 14 des jeweils darunter befindlichen Vollringes 2/3 eingreifen. Da die Öffnungen 14 durch die Ausprägungen 13 gebildet werden, können aufeinander liegende Formschlußelemente nicht gegeneinander verdreht zusammengesetzt zu einem Paket geschichtet werden. In diesem Falle liegen die Nuten des Innen- und/oder des Außenringes achsparallel.

Die verschiedenen Formschlußelemente 11, 13 sind selbstverständlich nicht gleichzeitig am Vollring 2/3 vorgesehen. Der Vollring 2/3 hat entweder nur die Formschlußelemente 11 oder 13.

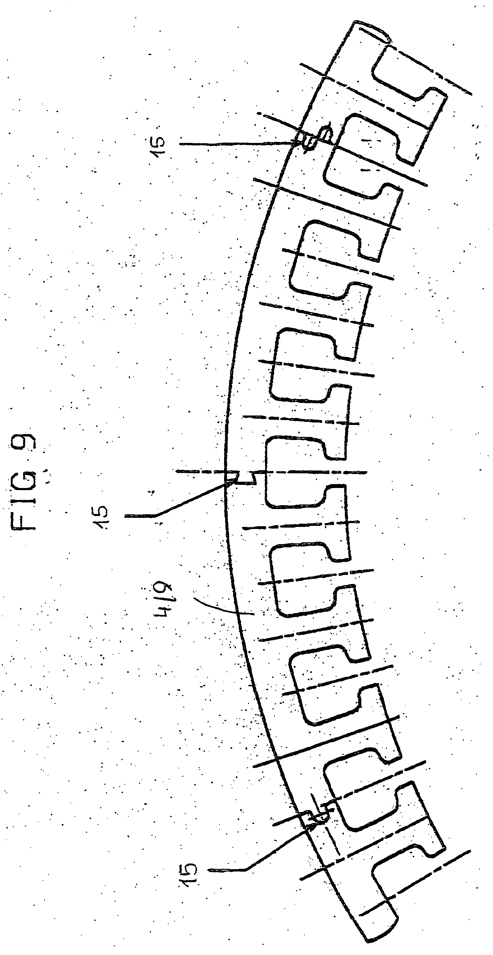

Um die Teilringsegmente 4/9 zu einem Vollring zusammenzusetzen, sind sie an ihren Enden mit Formschlußelementen 15 versehen. Fig. 9 zeigt verschiedene Ausführungsformen solcher Formschlußelemente 15. Die an beiden Enden des Teilringsegmentes 4/9 befindlichen Formschlußelemente 15 sind jeweils komplementär zueinander angeordnet. Das eine Formschlußelement 15 steht in Umfangsrichtung über das Teilringsegment vor, während das entsprechende Formschlußelement am anderen Ende dieses Teilringsegmentes 4/9 eine entsprechende Vertiefung ist.

Das in Fig. 9 linke Formschlußelement 15 wird durch einen etwa halbkreisförmigen Vorsprung gebildet, der in eine entsprechende halbkreisförmige Vertiefung des benachbarten Teilringsegmentes 4/9 eingreift.

Das in Fig. 9 mittlere Formschlußelement 15 ist schwalbenschwanzförmig ausgebildet und greift in eine entsprechende schwalbenschwanzförmige Vertiefung am anderen Ende des benachbarten Teilringsegmentes ein.

An einem Ende des Teilringsegmentes 4/9 können gleichzeitig ein in Umfangsrichtung überstehendes Formschlußelement 15 sowie eine Vertiefung angeordnet sein, in die das entsprechende vorstehende Formschlußelement des benachbarten Teilringsegmentes 4/9 eingreift. Dies ist in Fig. 9 für das rechte Formschlußelement dargestellt.

Die Formschlußelemente 15 dienen insbesondere auch als Positionierhilfen, mit denen sich die einzelnen Teilringsegmente einfach zu einem Vollring zusammensetzen lassen.

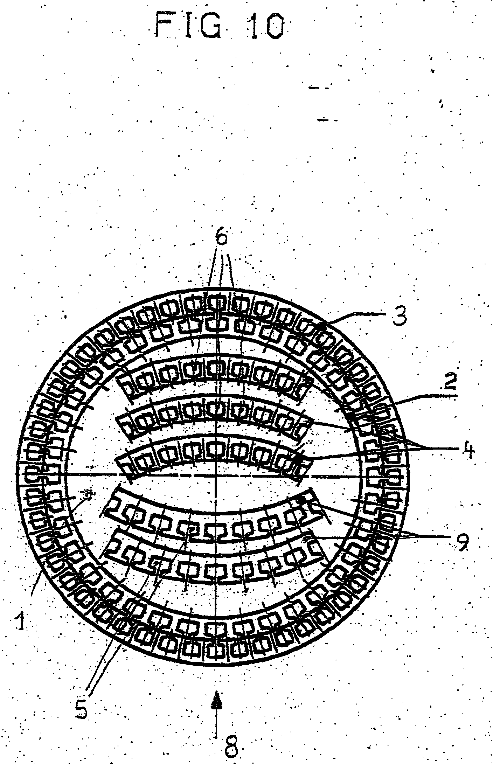

Fig. 10 zeigt die Möglichkeit, aus dem Innenausstoß 1 Teilringsegmente 4 und Teilringsegmente 9 zu erzeugen. Bei den Teilringsegmenten 4 befinden sich die Nuten 6 am Innenumfang, während bei den Teilringsegmenten 9 die Nuten 5 am Außenumfang vorgesehen sind. Dementsprechend kann aus den Teilringsegmenten 4 ein Außenring und aus den Teilringsegmenten 9 ein Innenring zusammengesetzt werden.

Entsprechend der Ausführungsform gemäß Fig. 4 werden zusätzlich zu den Teilringsegmenten 4 und 9 der Innenring 2 und der Außenring 3 aus dem Blech gestanzt.

Auch bei den zuvor beschriebenen Ausführungsformen können aus dem Innenausstoß 1 die Teilringsegmente 4 und 9 hergestellt werden. Die Teilringsegmente 4, 9 sind wiederum so in bezug auf die Stanz- bzw. Walzrichtung 8 angeordnet, daß die Pole des aus den Teilringsegmenten hergestellten Rotors oder Stators in Vorzugsrichtung 8 liegen und sich dadurch ein homogener Magnetfluß ergibt. Die Teilringsegmente 4 sowie die Teilringsegmente 9 können untereinander gleich ausgebildet sein. Es ist aber auch möglich, die Teilringsegmente 4 sowie auch die Teilringsegmente 9 untereinander unterschiedlich lang auszubilden.

Da bei den beschriebenen Ausführungsformen der Innenausstoß 1 zur Herstellung der Teilringsegmente 4, 9 herangezogen wird, wird das Blechband 7, 10 optimal ausgenutzt. Werden auch noch die Zwischenräume des Bleches 7 zwischen den Ausstanzungen zur Herstellung der Teilringsegmente 4/9 herangezogen (Fig. 7), ergibt sich eine hervorragende optimale Materialausnutzung. Die Teilringsegmente können so aus dem Innenausstoß 1 hergestellt werden, daß beim zusammengesetzten Rotor und/oder Stator die magnetische Flußrichtung der Statorpole in Walzrichtung 8 (Vorzugsrichtung) liegt. Für den Stator und den Rotor wird die gleiche Blechqualität verwendet. Wenn in der Schnittanlage ausreichend Platz vorhanden ist, können Teilringsegmente als Ausgleichssegmente zum Beispiel mit kleinerem Segmentwinkel mitgestanzt werden, wie dies beispielhaft in Fig. 7 dargestellt ist.

Die Formschlußelemente 11, 13 (Fig. 8a und 8b) können nicht nur an den Vollringen, sondern auch an den Teilringsegmenten 4/9 vorgesehen sein. Dann können auch die aus Teilringsegmenten zusammengesetzten Vollringe durch Stanzpaketieren zu Lamellenpaketen zusammengefügt werden. Diese aus Teilringsegmenten gebildeten Vollringe können dann auch, wenn die zungenförmigen Formschlußelemente 11 gemäß Fig. 8a eingesetzt werden, gegeneinander zur Erzeugung eines Dralles der Nuten verdreht werden.

Die Teilringsegmente 4, 9 können auch durch Stanzpaketieren zu Segmentpaketen zusammengefügt werden, die ihrerseits zum vollen Blechpaket zusammengesetzt werden.

## Patentansprüche

1. Blechlamellen für Blechpakete für Rotoren und/oder Statoren, Generatoren, Motoren, Startergeneratoren, Generatorstarter und dergleichen,
**dadurch gekennzeichnet, daß** die Blechlamellen (2, 3) des Rotors und/oder des Stators wenigstens teilweise aus Teilringsegmenten (4, 9) zusammengesetzt sind, die zumindest teilweise aus einem Innenausstoß (1) herausgetrennt sind, der bei der Herstellung der ringförmigen Blechlamellen (2, 3) im Blech (7, 10) als Rest verbleibt.

2. Blechlamellen nach Anspruch 1,
**dadurch gekennzeichnet, daß** die Teilringsegmente (4, 9) gleiche Länge haben.

3. Blechlamellen nach Anspruch 1,
**dadurch gekennzeichnet, daß** die Teilringsegmente (4, 9) unterschiedlich lang sind.

4. Blechlamellen nach einem der Ansprüche 1 bis 3,
**dadurch gekennzeichnet, daß** die Teilringsegmente (4, 9) in beliebigem Winkel zur Walzrichtung liegen.

5. Blechlamellen nach einem der Ansprüche 1 bis 4,
**dadurch gekennzeichnet, daß** zumindest ein Teil der Teilringsegmente (4, 9) quer zur Walzrichtung (8) des Bleches (7, 10) liegt.

6. Blechlamellen nach einem der Ansprüche 1 bis 5,
**dadurch gekennzeichnet, daß** die Teilringsegmente (4, 9) im Innenausstoß (1) parallel zueinander liegen.

7. Blechlamellen nach einem der Ansprüche 1 bis 5,
**dadurch gekennzeichnet, daß** die Teilringsegmente (4, 9) im Innenausstoß (1) spiegelsymmetrisch zueinander liegen.

8. Blechlamellen nach einem der Ansprüche 1 bis 7,
**dadurch gekennzeichnet, daß** die Teilringsegmente (4, 9) an ihren Enden jeweils wenigstens ein Formschlußelement (15) zur Verbindung zu einem Vollring aufweisen.

9. Blechlamellen nach einem der Ansprüche 1 bis 8,
**dadurch gekennzeichnet, daß** die Teilringsegmente (4, 9) für ein Stanzpaketieren mit wenigstens einem weiteren Formschlußelement (11, 13) versehen sind, das vorteilhaft in Umfangsrichtung des Teilringsegmentes (4, 9) kürzer ist als eine zugehörige Aufnahmeöffnung (12) und vorzugsweise über eine Seite des Teilringsegmentes (4, 9) vorsteht.

10. Blechlamellen nach einem der Ansprüche 1 bis 9,
**dadurch gekennzeichnet, daß** die Teilringsegmente (4, 9) zu einem Außen- und/oder zu einem Innenring zusammensetzbar sind.

11. Verfahren zur Herstellung von Blechlamellen nach einem der Ansprüche 1 bis 10, bei dem aus einem Blechband ein Vollring ausgestanzt wird, der einen Innenausstoß des Blechbandes umgibt,
**dadurch gekennzeichnet, daß** aus dem Innenausstoß (1) wenigstens ein Teilringsegment (4, 9) herausgetrennt wird.

12. Verfahren nach Anspruch 11,
**dadurch gekennzeichnet, daß** das Teilringsegment (4, 9) während der Herstellung des Vollringes (2, 3) in einem Folgewerkzeug ausgestanzt wird.

13. Verfahren nach Anspruch 11,
**dadurch gekennzeichnet, daß** das Teilringsegment (4, 9) nach dem Ausstanzen des Vollringes (2, 3) in einem separaten Arbeitsgang aus dem Innenausstoß (1) herausgetrennt wird.

14. Verfahren nach einem der Ansprüche 11 bis 13,
**dadurch gekennzeichnet, daß** mehrere Teilringsegmente (4, 9) in wenigstens zwei Arbeitsfolgen aus dem Innenausstoß (1) herausgetrennt werden.

15. Verfahren nach einem der Ansprüche 11 bis 14,
**dadurch gekennzeichnet, daß** im Blech (7, 10) zunächst Nuten (5, 6) des Vollringes (2, 3) und in wenigstens einem zweiten Schritt Teilringsegmente (4, 9) aus dem Innenausstoß (1) herausgetrennt werden, und daß vorteilhaft in weiteren Arbeitsgängen der Vollring (2, 3) aus dem Blech (7, 10) herausgetrennt wird.

16. Verfahren nach einem der Ansprüche 11 bis 15,
**dadurch gekennzeichnet, daß** als Blech (7) ein Schmalband verwendet wird.

17. Verfahren nach einem der Ansprüche 11 bis 15,
**dadurch gekennzeichnet, daß** als Blech (10) ein Scrollband verwendet wird.

18. Verfahren nach einem der Ansprüche 11 bis 17,
**dadurch gekennzeichnet, daß** aus Randbereichen des Bleches (7, 10) zusätzliche Teilringsegmente (4, 9) herausgetrennt werden.

19. Verfahren nach einem der Ansprüche 11 bis 18,
**dadurch gekennzeichnet, daß** am Innen- oder Außenrand des Teilringsegmentes (4, 9) Nuten (5, 6) hergestellt werden.
